# EUROPÄISCHE PATENTANMELDUNG

(11) **EP 0 544 197 A1**
(43) Veröffentlichungstag der Anmeldung: **02.06.1993**
(21) Anmeldenummer: 92119827.1
(22) Anmeldetag: 20.11.1992
(51) Int. Cl.: F24D 11/00, F24D 19/10

(54) **Warmwasserheizungsanlage für Gebäude**

(30) Priorität: 28.11.1991 DE 4139181
(71) Anmelder: EURATHERM HANDELS GmbH, D-85391 Allershausen (DE)
(72) Erfinder: Rabien, Peter, Dipl.-Ing., W-8500 Nürnberg (DE); von Spaun, Heinrich, W-8036 Herrsching (DE)
(74) Vertreter: Sperling, Rüdiger, Dipl.-Ing.

(57) **Zusammenfassung**

Bei einer Warmwasserheizungsanlage für Gebäude mit einem Heizkessel (2), einem gesonderten Brauchwasserkreislauf sowie Pumpen und Thermostaten ist dem Heizkessel (2) ein Laderegler (3) nachgeschaltet, durch welchen einem Speicher (1) Warmwasser mit im wesentlichen konstanter Temperatur jedoch unterschiedlicher Wassermenge zuführbar ist und ist das Warmwasser im Speicher in temperaturabhängigen Schichten gehalten.

## Beschreibung

Die Erfindung bezieht sich auf eine Warmwasserheizungsanlage für Gebäude mit einem Heizkessel, einem gesonderten Brauchwasserkreislauf sowie Pumpen und Thermostaten.

Die erfindungsgemäße Anlage eignet sich besonders für Einfamilien- und Zwei- bis Achtfamilienhäuser, jedoch nur in geringerem Ausmaß für Großgebäude, wie Großstadthäuser und Hochhäuser.

Warmwasserheizungsanlagen, z.B. für Einfamilienhäuser der oben angegebenen Art, arbeiten gewöhnlich nach dem Prinzip, das erkaltete Warmwasser durch stärker erwärmtes Wasser zu ersetzen; d.h. die bei der Anlage vorgesehenen Thermostate schalten den Heizkessel immer dann ein, wenn ein Wärmebedarf vorliegt bzw. wenn das im Warmwasserkreislauf zirkulierende Wasser aufgrund eines Wärmeaustausches über die Heizungsanlage oder durch eine Brauchwasserentnahme entsprechend kälter geworden ist. Es zirkuliert also immer die gleiche Wassermenge, jedoch mit unterschiedlicher Temperatur im Kreislauf. Dies hat zur Folge, daß sich der Heizkessel und somit der Brenner immer wieder an- und ausschaltet und somit entsprechende Abgase abgibt; auch bedingt die unterschiedliche Temperatur des vom Heizkessel geförderten Warmwassers eine besondere Temperatursteuerung an den einzelnen Heizkörpern, sofern eine unterschiedliche Wärmebeaufschlagung der einzelnen Heizkörper vorgesehen ist.

Der Erfindung liegt die Aufgabe zugrunde, die Aufheizphasen des Heizkessels zu verringern und Energie einzusparen.

Die Aufgabe wird dadurch gelöst, daß erfindungsgemäß dem Heizkessel ein Laderegler nachgeschaltet ist, durch welchen einem Speicher Warmwasser mit im wesentlichen konstanter Temperatur, jedoch unterschiedlicher Wassermenge zuführbar ist und daß das Warmwasser im Speicher in temperaturabhängigen schichten gehalten ist.

Bei der erfindungsgemäßen Warmwasserheizungsanlage wird somit mit einer praktisch konstanten Temperatur gearbeitet, zumindest soweit es sich um die Verbindung von Laderegler und Speicher und den Zuleitungen zu den Heizkörpern und dem Brauchwasserwärmetauscher handelt.

Nach einer bevorzugten Ausführungsform der Erfindung ist der Laderegler ein Gerät zum Steuern der Durchflußmenge des Warmwassers. Demzufolge ist die Temperatur des Warmwassers nicht nur zwischen dem Laderegler und dem Speicher konstant, sondern wird auch ständig konstant gehalten; dies wird durch die Regelung der Durchflußmenge des Warmwassers erreicht.

Nach einer bevorzugten Ausführungsform der Erfindung ist im Speicher unterhalb des Zulaufs des Warmwassers ein Verteiler zur Vermeidung von Verwirbelungen vorgesehen. Während bei bisherigen Speichern das Warmwasser düsenartig in den Speicher eingeleitet wird und somit Verwirbelungen zwischen dem warmen und dem kälteren Wasser herbeigeführt werden, soll bei der erfindungsgemäßen Anlage durch den Verteiler erreicht werden, daß das Warmwasser im oberen Abschnitt des Speichers unvermischt bleibt und daß das kalte bzw. erkaltete Wasser im unteren Abschnitt des Speichers ebenfalls unvermischt bleibt.

Nach einer bevorzugten Ausführungsform der Erfindung ist der Speicher über den Zu- und/oder Ablauf in beiden Richtungen mit Wasser beaufschlagbar und jeweils durch einen Thermostaten abgesichert. Da im Gegensatz zu bisher bekannten Speichern eine Beaufschlagung des Speichers in beiden Richtungen erfolgen kann und erfolgen soll, ist der erfindungsgemäße Speicher auch bei anderen Warmwasserheizungsanlagen verwendbar.

Nach einer bevorzugten Ausführungsform der Erfindung ist in den zum Heizkessel führenden Ablauf des erkalteten Wassers eine Ladepumpe eingeschaltet.

Zweckmäßigerweise ist der dem Laderegler nachgeschalteten Warmwasser gleicher Temperatur jedoch unterschiedlicher Wassermenge fördernden Endladepumpe eine zu den Heizkörpern und zum Brauchwasserwärmetauscher führende Leitung nachgeschaltet und eine zum Speicher führende Leitung vorgeschaltet.

Es ist auch möglich, daß der Brauchwasserwärmetauscher einerseits an die Ladepumpe und andererseits an das Frischwasserleitungsnetz angeschlossen ist.

Bevorzugterweise führt zwischen dem Laderegler und der Entladepumpe eine Leitung unmittelbar zum Speicher, durch welche Wasser in Richtung auf den Laderegler rückführbar ist.

Nach einer besonders bevorzugten Ausführungsform der Erfindung sind eine elektrische Steueranlage, die Entlade- und Ladepumpe, der Brauchwasserwärmeaustauscher und die zugeordneten Ventile zu einer Baueinheit zusammengeschlossen. Eine derartige Baueinheit kann selbstverständlich auch bei anders ausgebildeten Warmwasserheizungsanlagen Verwendung finden.

Zweckmäßigerweise weist die Baueinheit eine Schrankform und mindestens Rohranschlüsse für die Zu- und Ableitung des Warm- bzw. erkalteten Wassers, die Zu- und Ableitung des zu den Heizkörpern führenden Warm- oder erkalteten Wassers die Zu- und Ableitungen zum Zulauf und die Zu- und Ableitungen zum Ablauf des Speichers sowie die Ableitung des warmen Brauchwassers und die Zuleitung des Frischwassers vom Wasserleitungsnetz auf; es kann auch ein Rohranschluß für die Rücklaufanhebung zum Laderegler vorgesehen sein.

In besonders bevorzugter Weise sind der Speicher und mindestens ein Teil der Leitung wärmeisoliert; dies gilt auch für die Baueinheit, insbesondere wenn sie in Schrankform vorliegt.

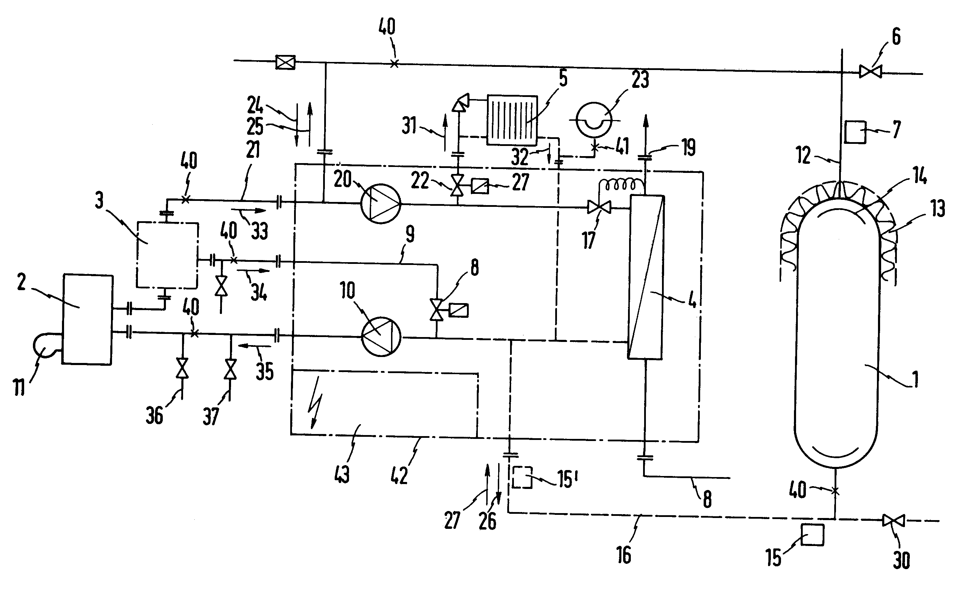

Aus der Zeichnung ist ein Schema eines Ausführungsbeispiels dargestellt.

Eine Warmwasserheizungsanlage weist einen Speicher 1, einen Heizkessel 2, einen Laderegler 3, einen Brauchwasseraustauscher 4 und eine beliebige Anzahl von Heizkörpern 5 auf.

Über ein Ventil 6 ist die Anlage mit Frischwasser vom Wasserleitungsnetzung versorgbar.

Ein Thermostat 7, der am Speichervorlauf montiert ist, signalisiert eine Öffnung des Ventils 8, so daß über eine Rücklaufanhebung 9 eine Ladepumpe 10 in Gang gesetzt wird; dies erfolgt mit der üblichen Verzögerung von 2 - 3 min. Dadurch springt der Ölbrenner 11 des Heizkessels 2 an und setzt die Warmwaserheizungsanlage in Betrieb. Der nunmehr in Gang gesetzte Laderegler 3, der unmittelbar am Kesselvorlauf montiert ist, regelt den Wasserstrom auf die Weise, daß das Warm- bzw. Heizwasser mit konstanter Vorlauftemperatur zum Speicher 1 und/oder zur Heizung 5 gefördert wird. Diese Temperatur kann beispielsweise 80 oder 75°C betragen. Die Rücklauftemperatur soll so kalt wie möglich sein. Im Speicher 1 sind weiter unten nähere Vorkehrungen getroffen, um das über die Leitung 12 in den mit einer Isolierschicht 13 versehenen Speicher eindringende Heißwasser oder Warmwasser über einen Kegel oder einer Prallplatte 14 zu verteilen, so daß das Vorlaufwasser gewissermaßen schichtweise sich auf dem Kaltspeicher oder Rücklaufwasser absetzt.

Die sich dabei ergebende Mischschicht zwischen dem ca. 70°C warmem Vorlauf und dem z.B. 20 oder 30°C kaltem Rücklaufwasser beträgt dabei nur wenige Millimeter.

Der Brenner 11 und die Ladepumpe 10 laufen nur so lange, bis der Thermostat 15 oder 15', angebracht an der Leitung 16, zum unteren Ende des Speichers 1 abschaltet.

Wenn kein Verbrauch erfolgt, dauert eine Ladeperiode z.B. mit einem 15 kW Brenner ca. 2 Stunden, mit einem 30 kW Brenner ca. 1 Stunde. Je nach der Außentemperatur und dem Dusch- oder Küchenwasserverbrauch sowie dem Verhältnis von Brennerleistung zum DIN-Wärmebedarf des Gebäudes können die Ladeperioden auch viele Stunden hintereinander dauern oder in einen Dauerbetrieb übergehen.

Über ein Ventil 17 wird die individuelle Temperatur des Brauchwassers, z.B. 45°C eingestellt. Der aus einem Plattenwärmetauscher bestehende Wärmeaustauscher 4 des Brauchwassers wird mit frischem Leitungswasser aus dem Wasserleitungsnetz über die Leitung 18 versorgt; die Entnahme erfolgt über die Leitung 19.

Die vom Laderegler 3 führende Leitung 21 führt einerseits zur Entladepumpe 20 und andererseits unmittelbar zum Speicher 1. Der Entladepumpe 20 nachgeschaltet ist ein Ventil 22, über welches die Zuleitung zu den Heizkörpern 5 geregelt werden.

Ein Membranausdehnungsgefäß 23 gleicht die Schwankungen des Warm- bzw. Heißwasserspiegels aus.

Wie durch die Pfeile 24 angedeutet, kann die Leitung 21 auch in umgekehrter Richtung beaufschlagt werden, d.h. also, daß das Warmwasser vom Speicher in Richtung auf den Laderegler läuft. Das gleiche gilt für die Leitung 16, die in Richtung 26 bzw. auch in Gegenrichtung 27 beaufschlagt werden kann.

Das Ventil 22, welches die Zuleitung zu den Heizkörpern 5 steuert, kann mit einer Uhr 27 versehen sein und/oder einen Schalter zur "Nachtabsenkung" aufweisen. Der Heizungsvorlauf ist mit dem Pfeil 31 und der Heizungsrücklauf mit dem Pfeil 32 angedeutet.

Mit dem Pfeil 33 ist die Richtung des heißen Vorlaufwassers vom Laderegler 3 zum Speicher 1 und mit dem Pfeil 34 die Richtung des heißen Vorlaufwassers vom Laderegler 3 zur Rücklaufanhebung 9 angedeutet.

Mit dem Pfeil 35 ist die Richtung des Rücklaufwassers vom Speicher 1 zum Kessel 2 angedeutet.

Über die Leitungen 36 und 37 können gegebenenfalls Nebenanschlüsse erfolgen, z.B. zu einer Solarkomponente oder einer Holzheizung o.dgl..

An den Stellen 40 können Thermometer eingebaut werden; an der Stelle 41 ein Manometer oder Hydrometer.

Mit der strichpunktierten Linie 42 sind die Umrisse eines wärmeisolierten Schrankes angedeutet, welcher nicht nur die beiden Pumpen und den Brauchwasserwärmeaustauscher, sondern auch die elektrische Steuerungsanlage 43 enthält. Wie ersichtlich, führen aus dem wärmeisolierten Schrank nur die einzelnen Rohranschlüsse heraus, so daß dieser Schrank als Baueinheit auch z.B. bei anderen Warmwasserheizungsanlagen Verwendung finden kann.

Wie ersichtlich weist bei dem dargestellten Ausführungsbeispiel der Schrank neun Rohranschlüsse auf; derartige Schränke können vorgefertigt und als Baueinheit geliefert werden, so daß bei der Montage lediglich die erforderlichen Rohranschlüsse vollzogen werden müssen.

Der Ordnung halber ist noch zu erwähnen, daß selbstverständlich neben dem Speicher auch noch die entsprechenden Rohrleitungen wärmeisoliert werden müssen, was schon deshalb mit besonderer Sorgfalt erfolgen muß, weil dadurch Energie gespart wird.

Die unter dem Zulauf 12 des Speichers 1 vorgesehene Prallplatte 14 kann auch kegelförmig ausgebildet sein; der aus der Leitung 12 austretende Warmwasserstrom soll auf eine möglichst große Fläche verteilt werden; es kann unterhalb der Platte oder dem kegelförmigen Verteiler noch eine Lochplatte vorgesehen sein, die sich über den gesamten Querschnitt des Speichers 1 erstrecken soll.

Die Prallplatte kann auch aus einem quadratischen Blech mit abgeschrägten Ecken bestehen, das an der Unterseite der Stirnplatte des Speichers an den vier Ecken mit letzterer verbunden ist.

Durch die Plallplatte, die z.B. 20 x 20 cm groß sein kann, wird das einströmende Warmwasser verteilt und fließt über die Kanten in den z.B. 1,5 m hohen Speicher, der z.B. auf einen max. 2,5 bar Innendruck abgestellt ist. Der Durchmesser des zylindrischen Speichers kann 60 cm betragen.

## Patentansprüche

1. Warmwasserheizungsanlage für Gebäude mit einem Heizkessel, einem gesonderten Brauchwasserkreislauf sowie Pumpen und Thermostaten, **dadurch gekennzeichnet**, daß dem Heizkessel ein Laderegler nachgeschaltet ist, durch welchen einem Speicher Warmwasser mit im wesentlichen konstanter Temperatur jedoch unterschiedlicher Wassermenge zuführbar ist und daß das Warmwasser im Speicher in temperaturabhängigen Schichten gehalten ist.

2. Anlage nach Anspruch 1, **dadurch gekennzeichnet**, daß der Laderegler ein Gerät zum Steuern der Durchflußmenge des Warmwassers aufweist.

3. Anlage insbesondere nach Anspruch 1 oder 2, **dadurch gekennzeichnet**, daß im Speicher unterhalb des Zulaufs des Warmwassers ein Verteiler zur Vermeidung von Verwirbelungen vorgesehen ist.

4. Anlage nach einem der Ansprüche 1 bis 3, **dadurch gekennzeichnet**, daß der Speicher über dem Zu- und/oder Ablauf in beiden Richtungen mit Wasser beaufschlagbar und jeweils durch ein Thermostat abgesichert ist.

5. Anlage nach einem der Ansprüche 1 bis 4, **dadurch gekennzeichnet**, daß in den zum Heizkessel führenden Ablauf des Wassers eine Ladepumpe eingeschaltet ist.

6. Anlage nach einem der Ansprüche 1 bis 5, **dadurch gekennzeichnet**, daß der dem Laderegler nachgeschalteten Warmwasser gleicher Temperatur jedoch unterschiedlicher Wassermenge fördernden Entladepumpe zu den Heizkörpern und zum Brauchwasserwärmetauscher führende Leitungen nachgeschaltet und eine zum Speicher führende Leitung vorgeschaltet ist.

7. Anlage nach Anspruch 6, **dadurch gekennzeichnet**, daß der Brauchwasserwärmetauscher einerseits an die Ladepumpe und andererseits an das Frischwasserleitungsnetz angeschlossen ist.

8. Anlage nach einem der Ansprüche 1 bis 7, **dadurch gekennzeichnet**, daß zwischen dem Laderegler und der Entladepumpe eine Leitung unmittelbar zum Speicher führt, durch welchen auch Wasser in Richtung auf den Laderegler rückführbar ist.

9. Anlage insbesondere nach einem der Ansprüche 1 bis 8, **dadurch gekennzeichnet**, daß eine elektrische Steueranlage, die Entlade- und die Ladepumpe, der Brauchwasserwärmetauscher und die zugeordneten Ventile zu einer Baueinheit zusammengeschlossen sind.

10. Anlage nach Anspruch 9, **dadurch gekennzeichnet**, daß die Baueinheit eine Schrankform aufweist und mindestens Rohranschlüsse für die Zu- und Ableitung des Warm- bzw. erkalteten Wassers, für die Zu- und Ableitung des zu den Heizkörpern führenden Warm- und erkalteten Wassers, die Zu- und Ableitung zum Zulauf und die Zu- und Ableitung zum Ablauf des Speichers sowie die Ableitung des warmen Brauchwassers und die Zuleitung des Frischwassers vom Wasserleitungsnetz aufweist.

11. Anlage nach Anspruch 10, **dadurch gekennzeichnet**, daß ein Rohranschluß für die Rücklaufanhebung zum Laderegler vorgesehen ist.

12. Anlage nach einem der Ansprüche 1 bis 11, **dadurch gekennzeichnet**, daß der Speicher und mindestens ein Teil der Leitungen wärmeisoliert sind.
